# EUROPÄISCHE PATENTANMELDUNG

(11) **EP 0 661 122 A1**
(43) Veröffentlichungstag der Anmeldung: **05.07.1995**
(21) Anmeldenummer: 94203646.8
(22) Anmeldetag: 15.12.1994
(51) Int. Cl.: B23B 27/14

(54) **Wendeschneidplatte**

(30) Priorität: 27.12.1993 AT 2624/93
(71) Anmelder: PLANSEE TIZIT GESELLSCHAFT M.B.H., A-6600 Reutte/Tirol (AT)
(72) Erfinder: Falger, Friedrich, D. I., A-6600 Reutte (AT); Koch, Wolfgang, A-6600 Reutte (AT)
(74) Vertreter: Lohnert, Wolfgang, Dr.

(57) **Zusammenfassung**

Die Erfindung betrifft eine Wendeschneidplatte mit positiver Schneidegeometrie und umlaufender Schneidkantenfase -4-. Die Wendeschneidplatte weist die grundlegende Form eines gleichwinkeligen Dreiecks auf, dessen Hauptschneidkanten -1- mit den Seiten des Dreiecks zusammenfallen. Die Ecken des Dreiecks sind durch Nebenschneidkanten -2+6-, die die Hauptschneidkanten -1- verbinden abgestumpft. Wesentlich ist, daß die Länge der Hauptschneidkanten -1- in einem Bereich zwischen 60 % und 100 % vom Durchmesser des Inkreises -5- der Wendeschneidplatte liegen. Die Nebenschneidkanten -2+6- weisen jeweils einen Planschneidkantenabschnitt -6- auf, der mit der angrenzenden Hauptschneidkante -1- einen Winkel δ zwischen 85° und 90° einschließt. Der Restabschnitt -2- der Nebenschneidkante -2+6- schließt mit der an den zugehörigen Planschneidkantenabschnitt -6- angrenzenden Hauptschneidkante -1- einen Winkel Σ zwischen 81° und 89° ein, der immer kleiner als der Winkel δ ist. Die Schneidecken -7- der Wendeschneidplatte an den Übergängen zwischen den Hauptschneidkanten -1- und dem jeweilig angrenzenden Planschneidkantenabschnitt -6- sind abgerundet.

## Beschreibung

Die Erfindung betrifft eine Wendeschneidplatte mit positiver Schneidengeometrie in der grundlegenden Form eines gleichwinkeligen Dreiecks, dessen Hauptschneidkanten mit den Seiten des Dreiecks zusammenfallen und dessen Ecken durch jeweils eine die jeweiligen Hauptschneidkanten verbindende Nebenschneidkante abgestumpft sind, wobei die Hauptschneidkanten und die Nebenschneidkanten unterschiedlich lang, untereinander jeweils aber gleich lang sind und Schneidkantenfasen aufweisen.

Eine Grundforderung bei der konstruktiven Auslegung der Wendeschneidplatten ist es, unter möglichst geringem Einsatz an Schneidwerkstoff eine möglichst große Zahl nacheinander einsetzbarer Schneidkanten mit ausreichender Schneidkantenlänge zur Verfügung zu haben und gleichzeitig eine Festigkeit zu haben, die für alle bei der Zerspanung auftretenden Belastungen ausreichend ist. Diese Forderung ist aufgrund der in der Praxis vorkommenden, zahlreichen unterschiedlichen Einsatzfälle nur durch Wendeschneidplatten unterschiedlicher konstruktiver Ausgestaltung befriedigend zu lösen.
Andererseits ist man bestrebt, mit einer möglichst geringen Zahl unterschiedlicher Wendeschneidplatten zu arbeiten, um die Logistik zu vereinfachen, sodaß man gezwungen ist, hinsichtlich der geometrischen Ausgestaltung von Wendeschneidplatten Kompromisse einzugehen. Derzeit haben sich als Standard Wendeschneidplatten, solche mit dreieckiger, rechteckiger, quadratischer oder sechseckiger Grundform durchgesetzt.

Wendeschneidplatten mit dreieckiger Grundform weisen kleine Eckenwinkel mit geringer Schneideckenstabilität auf. Bei positiver Schneidgeometrie stehen drei nacheinander verwendbare Schneidkanten mit bezogen auf den Inkreisdurchmesser großer Schneidkantenlänge zur Verfügung.

Um eine ausreichende Plattenstabilität zu gewährleisten müssen die Wendeschneidplatten in der Regel eine große Plattenstärke aufweisen. Die Positionierung derartiger Wendeschneidplatten im Werkzeug ist relativ schwierig. Es sind fertigungsstechnisch aufwendige Plattensitze mit großem Platzbedarf erforderlich.

Wendeschneidplatten mit rechteckiger Grundform weisen große Eckenwinkel mit guter Schneideckenstabilität auf. Die Schneidkantenlänge bezogen auf den Inkreisdurchmesser ist groß. Bei einer positiven Schneidengeometrie stehen jedoch nur zwei nacheinander einsetzbare Schneidkanten zur Verfügung.

Wendeschneidplatten mit quadratischer Grundform weisen ebenfalls große Eckenwinkel mit guter Schneideckenstabilität auf. Bei positiver Schneidengeometrie und einem Eckenwinkel von 90° können vier Schneidkanten nacheinander eingesetzt werden. Nachteilig dabei ist jedoch, daß die Schneidkantenlänge bezogen auf den Inkreisdurchmesser wiederum relativ gering ist und daß ein Eckenwinkel von 90° nur für eingegrenzte Werkzeuggeometrien - Radial- und Axialwinkel - realisierbar ist.

Wendeschneidplatten mit sechseckiger Grundform und gleich langen Schneidkanten weisen große Eckenwinkel mit ausgezeichneter Schneidecken-Stabilität auf. Bei positiver Schneidengeometrie sind sechs Schneidkanten nacheinander einsetzbar. Die Schneidkantenlänge bezogen auf den Inkreisdurchmesser ist jedoch ebenfalls gering und für viele Einsatzfälle nicht ausreichend und darüberhinaus sind derartige Wendeschneidplatten wegen der kurzen Schneidkantenlänge nur schwer positionierbar.

Neben diesen Standard-Grundformen von Wendeschneidplatten sind auch eine große Zahl von Sonderformen bekannt und oftmals für spezielle Zerspanungsoperationen unvermeidlich.

Die US-PS 4 297 058 beschreibt eine Wendeschneidplatte mit im wesentlichen dreieckförmiger Grundform, deren Schneidecken durch kurze Schneidkantenabschnitte geringfügig abgestumpft sind. Aufgrund der speziellen Winkel und Längenverhältnisse der einzelnen Schneidkantenabschnitte zueinander ist eine derartige Wendeschneidplatte ausschließlich zur Innenbearbeitung und zum Schälen geeignet. Zum konventionellen Drehen und zum Fräsen ist eine derartige Wendeschneidplatte ungeeignet.

Die EP-PS 313 044 beschreibt ebenfalls eine Wendeschneidplatte mit im wesentlichen dreieckförmiger Grundform, deren Schneidecken durch kurze Schneidkantenabschnitte derart abgestumpft sind, daß sich ein Eckenwinkel von etwa 90° ergibt. Die Verwendung einer derartigen Wendeschneidplatte erstreckt sich auf die gleichen Anwendungen wie bei der Wendeschneidplatte entsprechend der US-PS 4 297 058. Dadurch, daß die Schneidecken durch den relativ kurzen Schneidkantenabschnitt nur geringfügig stabilisiert sind und der Übergang zwischen Hauptschneidkante und Nebenschneidkante unstabilisiert ist, ist eine derartige Wendeschneidplatte vor allem nicht zum Fräsen geeignet.

Die Aufgabe der vorliegenden Erfindung besteht daher darin, eine Wendeschneidplatte zu schaffen, die universell zur stehenden als auch rotierenden Bearbeitung geeignet ist und die eine ausgezeichnete Stabilität bei kleiner Plattenstärke sowie ein günstiges Verhältnis zwischen der Menge an eingesetztem Schneidwerkstoff zu Anzahl und Länge der Schneidkanten aufweist.

Erfindungsgemäß wird dies dadurch erreicht, daß die Länge der Hauptschneidkanten in einem Bereich zwischen 60 % und 100 % vom Inkreisdurchmesser liegt, daß die Nebenschneidkanten jeweils einen Planschneidkantenabschnitt aufweisen, der mit der angrenzenden Hauptschneidkante einen Winkel δ zwischen 85° und 90° einschließt, während der Restabschnitt der Nebenschneidkante mit der an den zugehörigen Planschneidkantenabschnitt angrenzenden Hauptschneidkante einen Winkel Σ zwischen 81° und 89° einschließt, wobei δ größer Σ, und daß die Schneidecken, die von den Hauptschneidkanten und dem jeweiligen angrenzenden Planschneidkantenabschnitt gebildet werden, abgerundet sind.

Eine derartige Wendeschneidplatte weist große Eckenwinkel mit einer großen Stabilität der Schneidecken auf. Die Hauptschneidkanten bezogen auf den Inkreisdurchmesser sind relativ lang. Durch die Ausbildung der Nebenschneidkante mit einem Planschneidkantenabschnitt wird eine hohe Oberflächengüte bei großen Vorschüben erreicht. Auch bei kleinen Plattenstärken und Wendeschneidplatten mit Mittelloch weist eine derartige Wendeschneidplatte eine ausgezeichnete Stabilität auf. Das Verhältnis zwischen eingesetztem Schneidstoff zu Anzahl und Länge der Hauptschneiden ist äußerst günstig. Die erfindungsgemäße Wendeschneidplatte erlaubt eine exakte Positionierung im Plattensitz. Der Planschneidkantenabschnitt kann gerade oder auch geringfügig konvex gekrümmt ausgeführt sein.

Als besonders vorteilhafte Ausgestaltung für viele Anwendungsfälle hat es sich herausgestellt, wenn die Länge der Hauptschneidkante in einen Bereich zwischen 80% und 85% vom Inkreisdurchmesser der Wendeschneidplatte liegt und zwischen 30 und 50% der Nebenschneidkante als Planschneidkantenabschnitt ausgeführt ist.

Als günstig hat es sich erwiesen, wenn die Keilwinkel β₁ an den Planschneidkantenanschschnitten kleiner als die Keilwinkel β₂ an den Hauptschneidkanten sind. Auf diese Weise kann die Wendeschneidplatte axial geneigt werden.

Desweiteren ist es vorteilhaft, wenn der Winkel δ zwischen 3° und 5° größer ist als der Winkel Σ und auch der Übergang zwischen dem Restabschnitt der Nebenschneidkante und der angrenzenden Hauptschneidkante abgerundet ist.

Als vorteilhaft hat es sich auch erwiesen, wenn der Keilwinkel β1 an den Planschneidkanten um 2 bis 4° kleiner ist als der Keilwinkel β2 an den Hauptschneidkanten.

Um die Stabilität in den Schneidecken insbesondere für Fräsoperationen nochmals zu verbessern ist es vorteilhaft, wenn die Schneidkantenfase in diesem Eckbereich breiter ist als entlang der im wesentlichen geraden Schneidkanten.

Insbesondere bei Fräs- und Bohrwerkzeugen mit kleinen Durchmessern ist es vorteilhaft, wenn die Freiflächen der erfindungsgemäßen Wendeschneidplatte jeweils zwei Abschnitte mit unterschiedlichen Freiwinkeln aufweisen, und zwar einen an die Schneidkantenfase angrenzenden Abschnitt mit einem Freiwinkel α1 und einen an die Grundfläche der Wendeschneidplatte angrenzenden Abschnitt mit einem Freiwinkel α2, wobei α2 größer ist als α1.

Im folgenden wird die Erfindung anhand von Zeichnungen näher erläutert.
Es zeigen
- Fig. 1: die Draufsicht auf eine erfindungsgemäße Wendeschneidplatte
- Fig. 2: die Wendeschneidplatte nach Fig. 1 im Schnitt A-A
- Fig. 3: die Wendeschneidplatte nach Fig. 1 im Schnitt B-B

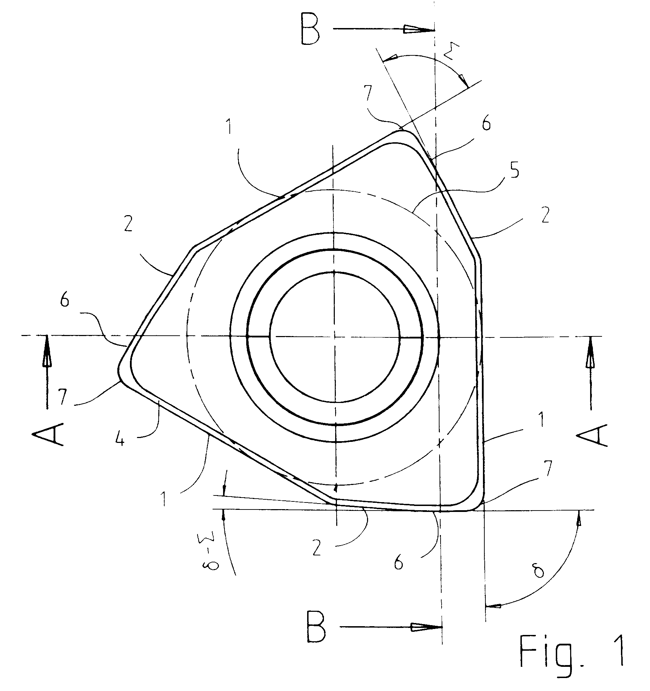

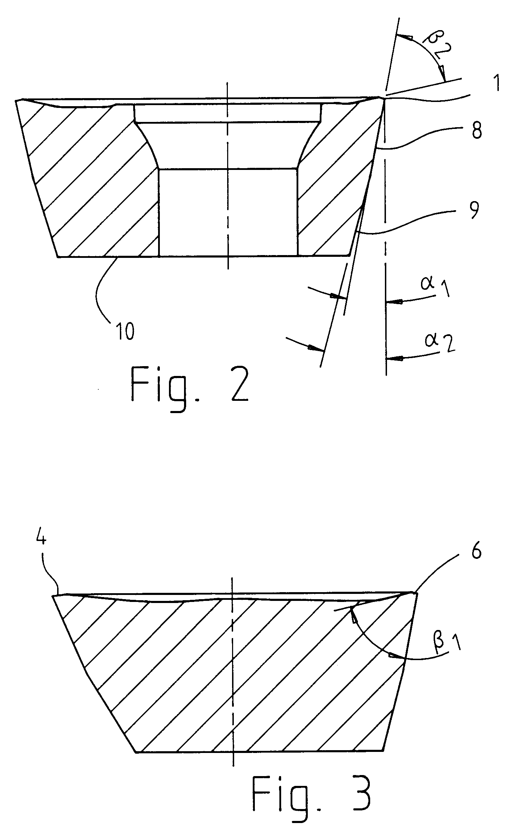

Die erfindungsgemäße Wendeschneidplatte entsprechend den Figuren 1 bis 3 hat in etwa die Form eines gleichwinkeligen Dreiecks, wobei die Hauptschneidkanten -1- mit den Seiten des Dreiecks zusammenfallen. Die Ecken des Dreiecks sind durch jeweils eine Nebenschneidkante -2+6-, die zwei Hauptschneidkanten -1- verbindet abgstumpft.
Die Wendeschneidplatte weist eine positive Schneidgeometrie und eine umlaufende Schneidkantenfase -4- auf.
Die Länge der Hauptschneidkanten -1- beträgt etwa 80 % des Durchmessers des Inkreises -5- der Wendeschneidplatte. Jede Nebenschneidkante -2+6- weist einen Planschneidkantenabschnitt -6- auf der mit der angrenzenden Hauptschneidkante -1- einen Winkel δ von 90° einschließt. Der Restabschnitt -2- jeder Nebenschneidkante -2+6- schließt mit der jeweiligen Hauptschneidkante -1- die an den Planschneidkantenabschnitt -6- der Nebenschneidkante -2+6-angrenzt einen Winkel Σ von 87° ein. Die Schneidecken -7- der Wendeschneidplatte an den Übergängen der Hauptschneidkanten -1- zu den Planschneidkantenabschnitten -6- sind abgerundet.
Die Schneidkantenfase -4- ist im Bereich der Schneidecken -7-breiter ausgeführt als entlang der restlichen Schneiden.
Aus Fig. 2 ist zu ersehen, daß die erfindungsgemäße Wendeschneidplatte eine gegliederte Freifläche mit zwei Abschnitten -8- und -9- aufweist. Der an die Schneidkantenfase -4- angrenzende Abschnitt -8- weist einen kleineren Freiwinkel α₁ auf, als der an die Grundfläche -10-der Wendeschneidplatte angrenzende Abschnitt -9- mit dem Freiwinkel α₂.

## Patentansprüche

1. Wendeschneidplatte mit positiver Schneidengeometrie in der grundlegenden Form eines gleichwinkeligen Dreiecks, dessen Hauptschneidkanten (1) mit den Seiten des Dreiecks zusammenfallen und dessen Ecken durch jeweils eine die jeweiligen Hauptschneidkanten (1) verbindende Nebenschneidkante (2+6) abgestumpft sind, wobei die Hauptschneidkanten (1) und die Nebenschneidkanten (2+6) unterschiedlich lang, untereinander jeweils aber gleich lang sind und Schneidkantenfasen (4) aufweisen,
**dadurch gekennzeichnet**,
daß die Länge der Hauptschneidkanten (1) in einem Bereich zwischen 60 % und 100 % vom Durchmesser des Inkreises (5) der Wendeschneidplatte liegt, daß die Nebenschneidkanten (2+6) jeweils einen Planschneidkantenabschnitt (6) aufweisen, der mit der angrenzenden Hauptschneidkante (1) einen Winkel δ zwischen 85° und 90° einschließt, während der Restabschnitt (2) der Nebenschneidkante mit der an den zugehörigen Planschneidkantenabschnitt (6) angrenzenden Hauptschneidkante (1) einen Winkel Σ zwischen 81° und 89° einschließt, wobei δ größer Σ, und daß die Schneidecken (7) die von den Hauptschneidkanten (1) und dem jeweiligen angrenzenden Planschneidkantenabschnitt (6) gebildet werden, abgerundet sind.

2. Wendeschneidplatte nach Anspruch 1, dadurch gekennzeichnet, daß die Keilwinkel β₁ an den Planschneidkantenabschnitten (6) kleiner als die Keilwinkel β₂ an den Hauptschneidkanten (1) sind.

3. Wendeschneidplatte nach Anspruch 2, dadurch gekennzeichnet, daß der Keilwinkel β1 an den Nebenschneidkanten (2+6) um 2° bis 4° kleiner ist als der Keilwinkel β2 an den Hauptschneidkanten (1).

4. Wendeschneidplatte nach einem der Ansprüche 1-3, dadurch gekennzeichnet, daß die Länge der Hauptschneidkanten (1) in einem Bereich zwischen 80 % und 85 % vom Durchmesser des Inkreises (5) der Wendeschneidplatte liegt und daß zwischen 30 % und 50 % der Gesamtlänge der Nebenschneidkanten (2+6) als Planschneidkantenabschnitt (6) ausgeführt sind.

5. Wendeschneidplatte nach einem der Ansprüche 1 bis 4, dadurch gekennzeichnet, daß der Winkel δ zwischen 3° und 5° größer ist als der Winkel Σ

6. Wendeschneidplatte nach einem der Ansprüche 1 bis 5, dadurch gekennzeichnet, daß auch jeweils der Übergang zwischen dem Restabschnitt (2) der Nebenschneidkanten (2+6) und der jeweils angrenzenden Hauptschneidkante (1) abgerundet ist.

7. Wendeschneidplatte nach einem der Ansprüche 1 bis 6, dadurch gekennzeichnet, daß die Breite der Schneidkantenfase (4) in den Eckbereichen (7) zwischen Hauptschneidkante (1) und Planschneidkantenabschnitt (6) größer ist als entlang der im wesentlichen geraden Schneidkanten.

8. Wendeschneidplatte nach einem der Ansprüche 1 bis 7, dadurch gekennzeichnet, daß die Freiflächen jeweils zwei Abschnitte (8,9) mit unterschiedlichen Freiwinkeln aufweisen, und zwar einen an die Schneidkantenfase (4) angrenzenden Abschnitt (8) mit einem Freiwinkel α1 und einen an die Grundfläche (10) der Wendeschneidplatte angrenzenden Abschnitt (9) mit einem Freiwinkel α2, wobei α2 größer ist als α1.
